# EUROPEAN PATENT SPECIFICATION

(11) **EP 4 528 203 B1**
(45) Date of publication and mention of the grant of the patent: **01.10.2025**
(21) Application number: 23198997.1
(22) Date of filing: 22.09.2023
(51) Int. Cl.: F28D 20/02

(54) **A THERMAL ENERGY STORAGE SYSTEM**
WÄRMEENERGIESPEICHERSYSTEM
SYSTÈME DE STOCKAGE D'ÉNERGIE THERMIQUE

(43) Date of publication of application: 26.03.2025
(73) Proprietor: VOLVO TRUCK CORPORATION, 405 08 Göteborg (SE)
(72) Inventor: C M, Tejaswini, 560072 Bangalore (IN); DUBEY, Shital, 490006 Bhilai (IN); VARANASI, Bhargav, 560043 Bangalore (IN)
(74) Representative: Zacco Sweden AB

(56) References cited:
- DE-A1- 102012 018 577
- DE-A1- 102015 015 335
- US-A- 5 228 504

## Description

### TECHNICAL FIELD

The disclosure relates generally to a thermal energy storage system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

During a drive cycle of a vehicle, large amount of heat energy is generated. Most of the heat energy is dissipated to the environment as heat. A thermal battery may be used to store some of the waste heat energy during the drive cycle of the vehicle. The stored heat energy may at a later stage be discharged for heating parts of the vehicle. There is, however, still room for improvement.

DE 10 2015 015335 A1 discloses a thermal energy storage system according to the preamble of claim 1.

### SUMMARY

According to a first aspect of the disclosure, there is provided a thermal energy storage system according to claim 1.

The first aspect of the disclosure may seek to enable an improved usage of available thermal energy, such as waste heat. A technical benefit may include that, by providing a thermal energy storage system in which the conduit arrangements are not only in contact with the heat storing material, but also in contact with each other, thermal energy transfer may occur between three mediums rather than between just two mediums. In traditional heat exchangers, the thermal energy transfer normally occurs between two mediums, typically a hot fluid and a cold fluid at any given point in time. By allowing thermal energy to be transferred between three mediums simultaneously an improved performance may be achieved, which may advantageously be utilized for extracting more heat from, for example, waste heat recovery arrangements, and utilizing such extracted heat to provide thermal energy to different components/systems.

By way of example, assuming that the first conduit arrangement carries a relatively hot working fluid and the second conduit arrangement carries a relatively cold working fluid, heat may be transferred from the relatively hot working fluid to the heat storing material for energy storage, as well as being transferred from the relatively hot working fluid to the relatively cold working fluid. Thus, the first conduit arrangement could guide a first working fluid that takes up, for instance, waste heat from any heat generating system, such as in a vehicle or other machine. The heat taken up by the first working fluid can then be stored by the heat storing material for subsequent usage, as well as be transferred to the second working fluid for heating some other component that may need to be heated. By, for example, controlling the flow rates through the conduit arrangements, the amount of heat that is stored/discharged by the heat storing material and the amount of heat that is transferred to the second working fluid, may be appropriately controlled.

Optionally in some examples, including in at least one preferred example, the first conduit arrangement may be immersed in the heat storing material to enable thermal energy to be transferred between the first working fluid and the heat storing material, and wherein the second conduit arrangement may be immersed in the heat storing material to enable thermal energy to be transferred between the heat storing material and the second working fluid. A technical benefit may include that by immersing the conduit arrangements in the heat storing material, a large area of the conduit arrangements will be in contact with the heat storing material, thereby improving the thermal energy transfer between the working fluids in the conduit arrangements and the heat storing material.

Optionally in some examples, including in at least one preferred example, the heat storing material may be a phase change material (PCM). A technical benefit may include that PCM can be used for relatively long-term energy storage with high efficiency. As the PCM is heated and liquified, i.e., the PCM changes phase from solid state to liquid state, energy is recovered. Conversely, when the reverse phase change occurs, from liquid state to solid state, energy is discharged. Some non-limiting examples of different PCMs include organic PCMs (e.g., hydrocarbons, paraffins, lipids, etc.), or inorganic PCMs (e.g., salt hydrates). Although PCM is an advantageous option, it should be understood that in other examples, other heat storing materials may be used. For instance, in some examples, the heat storing material may be sand, which also has the capability to take up and later discharge thermal energy. Other materials that do not necessarily liquify at the operating temperatures of the system may also be conceivable.

Optionally in some examples, including in at least one preferred example, the first conduit arrangement may be configured to guide a relatively hot working fluid from a first fluid inlet to a first fluid outlet, to cause phase change material in said internal volume to change from solid state to liquid state. Analogously to the above discussion, a technical benefit may include that the PCM can efficiently take up and store heat from the relatively hot working fluid.

Optionally in some examples, including in at least one preferred example, the second conduit arrangement may be configured to guide a relatively cold working fluid from a second fluid inlet to a second fluid outlet, to cause phase change material in said internal volume to change from liquid state to solid state. Analogously to the above discussion, a technical benefit may include that the PCM can efficiently discharge the stored heat to the relatively cold working fluid.

According to the invention the first conduit arrangement may comprise a first plurality of passages forming a first meshed structure. A technical benefit may include that a meshed structure may increase the thermal energy transfer area, thus improving the thermal energy transfer. It can be understood that a meshed structure may resemble and act more like a heat exchanger plate compared to traditional straight pipes, thus enabling an increased thermal energy transfer area. Also, the pressure drop is reduced compared to traditional plate type heat exchangers. Furthermore, the spaces between the mesh also contribute in the thermal energy transfer.

According to the invention, the second conduit arrangement may comprise a second plurality of passages forming a second meshed structure. Analogously to the above discussion, a technical benefit may, inter alia, include that a meshed structure may increase the thermal energy transfer area, thus improving the thermal energy transfer.

Optionally in some examples, including in at least one preferred example, the first plurality of passages may at least partly overlap the second plurality of passages. A technical benefit may include that this allows for a tight structure to be achieved, with improved thermal energy transfer. Furthermore, the overlapping may provide a plurality of contact points between the first conduit arrangement and the second conduit arrangement, thereby improving energy transfer between the conduit arrangements.

Optionally in some examples, including in at least one preferred example, said first plurality of passages may be interlaced with said second plurality of passages, such that said first plurality of passages altematingly and repeatedly extend on mutually opposite sides of the second meshed structure. A technical benefit may include that a relatively large surface area for efficient heat transfer is achieved, enabling heat conductivity to be improved between the three mediums.

Optionally in some examples, including in at least one preferred example, the thermal energy storage system may comprise a plurality of capsules containing heat storing material, such as phase change material, wherein the capsules are located in mesh openings formed by the first and/or second meshed structure. A technical benefit may include that by providing heat storing materials in capsules, an improved predictability may be achieved. For instance, during filling of heat storing material (such as PCM) in a large container (such as a housing defining an internal volume), some amount of air may get trapped between different layers of heat storing material, which may result in the formation of void during melting and solidification process. Air in the void may therefore act as insulator during heat transfer and thus the performance may depend on the amount of trapped air. Therefore, although encapsulated heat storing material may take up thermal energy less efficiently compared to non-encapsulated heat storing material, the predictability of the performance may be better.

Optionally in some examples, including in at least one preferred example, said first conduit arrangement and said second conduit arrangement may form a conduit arrangement pair, wherein the thermal energy storage comprises a plurality of such conduit arrangement pairs extending in parallel with one another. A technical benefit may include that by providing several conduit arrangement pairs the thermal energy transfer may be further improved as there will be more interfaces between the different mediums. The parallel conduit arrangement pairs can be resembled to parallel plates in a plate type heat exchanger, without having the disadvantageous pressure drop of such plate type heat exchangers.

Optionally in some examples, including in at least one preferred example, at least one of the first and second conduit arrangements are provided with fins for increased heat transfer area. A technical benefit may include an improved thermal energy transfer due to the increased area.

Optionally in some examples, including in at least one preferred example, the thermal energy storage system may further comprise metal foam soaked in said heat storing material. A technical benefit may include that the conductivity of the heat storing material (for example, PCM) may be further increased.

Optionally in some examples, including in at least one preferred example, the first conduit arrangement may be configured to guide the first working fluid in a first geometrical plane across said internal volume, wherein the second conduit arrangement may be configured to guide the second working fluid in a second geometrical plane across said internal volume, wherein the second geometrical plane extends in parallel with the first geometrical plane. A technical benefit may include that providing the conduit arrangement in separate planes, may be beneficial from a manufacturing point of view, e.g., compared to interlaced conduit arrangements. In some examples the first conduit arrangement and the second conduit arrangement, being provided in parallel geometrical planes, may comprise passages the form meshed structures, similarly to what has been discussed above.

Optionally in some examples, including in at least one preferred example, the first conduit arrangement may be provided with at least one first conduit portion extending from the first geometrical plane to the second geometric plane to enable the first working fluid to come into contact with an outside surface of the second conduit arrangement. Analogously to the above discussion, a technical benefit may include ease of manufacturing of the thermal energy storage system.

Optionally in some examples, including in at least one preferred example, the second conduit arrangement may be provided with at least one second conduit portion extending from the second geometrical plane to the first geometric plane to enable the second working fluid to come into contact with an outside surface of the first conduit arrangement. Analogously to the above discussion, a technical benefit may include ease of manufacturing of the thermal energy storage system.

Optionally in some examples, including in at least one preferred example, the passages forming the meshed structure or structures may extend diagonally with respect to a main flow direction through the internal volume. A technical benefit may include that a large thermal energy transfer area may be achieved by diagonally extending passages.

Optionally in some examples, including at least one preferred example, said interlaced first and second plurality of passages overlap each other at locations where the passages cross above/below each other, forming points of contact between the first conduit arrangement and the second conduit arrangement. A technical benefit may include that the interlaced formation as such provides points of contact between the first and second conduit arrangement, thus not requiring any particular projecting portions from one conduit arrangement to the other one.

According to a second aspect of the disclosure, there is provided a vehicle comprising the thermal energy storage system of the first aspect, including any example thereof. The second aspect of the disclosure may seek to enable an improved usage of available thermal energy, such as waste heat, generated in a vehicle. Technical benefits of various examples of the vehicle according to the second aspect may be largely analogous to the technical benefits of corresponding examples of the thermal energy storage system according to the first aspect.

Optionally in some examples, including in at least one preferred example, the vehicle may further comprise:
- a heat source, such as a retarder, battery, internal combustion engine, motor, fuel cell aggregates, wherein the first working fluid is configured to absorb thermal energy from the heat source and is configured to, from the first conduit arrangement, discharge absorbed thermal energy, and
- a heat sink, such as a battery or cab heating system, wherein the second working fluid, in the second conduit arrangement, is configured to absorb thermal energy and is configured to discharge absorbed thermal energy to the heat sink.

A technical benefit may include that an efficient utilization can be made of heat from the heat source, by using the thermal energy storage system to provide some of the heat energy from the heat source to heat the heat sink. As should be understood, examples of the present disclosure allow heat to be stored by the heat storing material for subsequent usage and/or allow heat to be transferred from the first working fluid to the second working fluid to heat the heat sink.

Although some examples have been mentioned above with respect to possible heat sources and heat sinks, it should be understood that these are just illustrative examples. Indeed, it should be readily understood that the general principle of letting the first working fluid take up thermal energy from a heat source may be implemented for many different components, devices, systems etc. that generate heat. Similarly, it should be readily understood that the general principle of letting the second working fluid transfer thermal energy to a heat sink may be implemented for many different components, devices, systems, etc. that may benefit from receiving thermal energy. Furthermore, although the second aspect of this disclosure specifically relates to a vehicle comprising the thermal energy storage system of the first aspect, it should be readily understood that the thermal energy storage system may be implemented in relation to other machines and apparatuses than just a vehicle. Thus, the present disclosure encompasses many other aspects in which the thermal energy storage system is implementable.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** schematically illustrates a vehicle according to one example of this disclosure.
**FIG. 2** schematically illustrates a thermal energy storage system according to one example of this disclosure.
**FIG. 3** schematically illustrates a thermal energy storage system according to another example of this disclosure.
**FIG. 4** schematically illustrates a view of a detail of the example in **FIG. 3****.**
**FIGS. 5** and **6** schematically illustrate the functioning of conduit arrangements that are present in the example in **FIG. 3****.**
**FIG. 7** schematically illustrates a thermal energy storage system according to yet another example of this disclosure.
**FIG. 8** schematically illustrates a thermal energy storage system according to a further example of this disclosure.
**FIG. 9** illustrates a side view of the example in **FIG. 8****.**

### DETAILED DESCRIPTION

The detailed description set forth below provides information and examples of the disclosed technology with sufficient detail to enable those skilled in the art to practice the disclosure.

In various industrial applications, such as machines, vehicles, and other apparatuses, a large amount of heat energy may be generated which oftentimes is dissipated to the environment as waste heat. Such waste heat may advantageously be at least partly recoverable and reused for other components, systems, etc. that may benefit from being heated. By providing a thermal energy storage system in which thermal energy transfer may occur between three different mediums simultaneously, an improved and energy efficient usage may be achieved. In particular, as presented herein, a thermal energy storage system of this disclosure thermally interconnects a working fluid in one conduit arrangement with a heat storing material, as well as with another working fluid in another conduit arrangement. Hereby, thermal energy may be stored in the heat storing material for later usage and/or thermal energy may directly be transferred from a relatively hot working fluid to a relatively cold working fluid. Furthermore, if the heat storing material has stored thermal energy, the relatively cold working fluid may simultaneously receive thermal energy from the relatively hot working fluid and from the heat storing material.

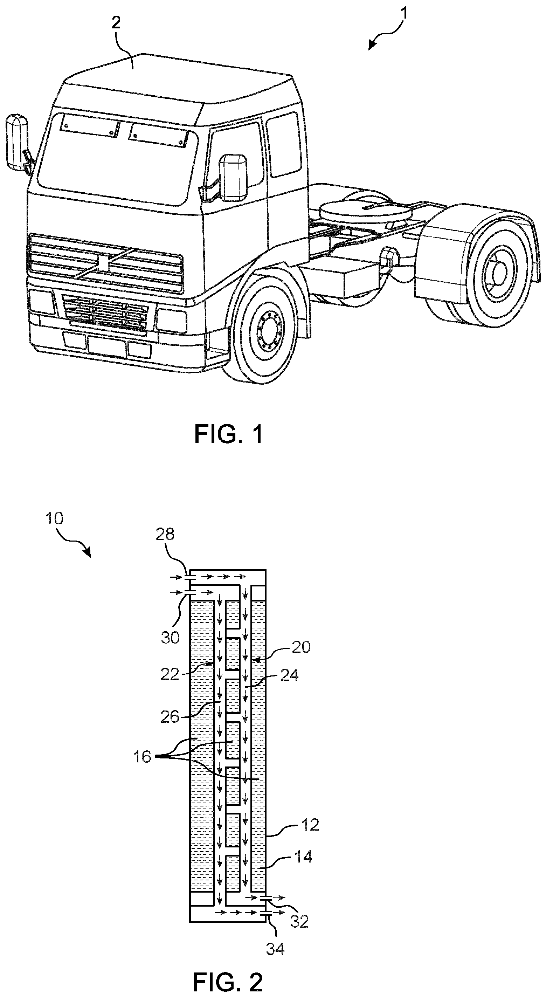

**FIG.** 1 schematically illustrates a vehicle **1** according to one example of this disclosure. The exemplary illustration in **FIG. 1** shows a tractor unit for towing a trailer unit (not shown), which together make up a semitrailer vehicle. However, the teachings of this disclosure are applicable to other types of vehicles as well. For instance, the vehicle may be a different type of vehicle for cargo transport, such as a truck, or a truck with a dolly unit arranged to tow a trailer unit, etc. Other conceivable examples include a bus, construction equipment or other vehicle types. The vehicle **1** may be powered by an internal combustion engine (ICE). However, the vehicle **1** may in other examples be powered by other types of motors. For instance, the vehicle **1** may be a fuel cell electric vehicle (FCEV), battery electric vehicle (BEV) or hybrid vehicle. The illustrated vehicle **1** comprises a cabin **2** in which a driver may operate the vehicle **1.** However, in other exemplary embodiments the vehicle **1** may be an autonomous, i.e., self-driving, vehicle.

The vehicle **1** may comprise a thermal energy storage system of this disclosure, some examples of which will be discussed below. However, it should be understood that the thermal energy storage system of this disclosure may be implemented in other technical fields and is thus not limited to vehicle implementations.

**FIG. 2** schematically illustrates a thermal energy storage system **10** according to one example of this disclosure. The thermal energy storage system **10** comprises an insulated housing **12** defining an internal volume **14.** A heat storing material **16** is contained in said internal volume **14.** The thermal energy storage system **10** further comprises a first conduit arrangement **20** and a second conduit arrangement **22.** The first conduit arrangement **20** is configured to carry a first working fluid **24** and extends across the internal volume **14** such that thermal energy is transferrable between the first working fluid **24** and the heat storing material **16.** The second conduit arrangement **22** is configured to carry a second working fluid **26** and extends across the internal volume **14** such that thermal energy is transferrable between the heat storing material **16** and the second working fluid **26.** The first working fluid **24** and the second working fluid **26** are fluidly separated from each other inside the housing **12.** The first conduit arrangement **20** and the second conduit arrangement **22** are in contact with each other so that thermal energy is transferrable between the first working fluid **24** and the second working fluid **26.**

As illustrated in **FIG. 2** the first conduit arrangement **20** and the second conduit arrangement **22** may be in contact with each other at multiple discrete areas of contact. However, it is also conceivable to have the first conduit arrangement **20** and the second conduit arrangement **22** to have fewer areas of contact, such as a single area of contact.

The heat storing material **16** may in this and other examples be, or include, a phase change material (PCM). Such PCM may be an organic PCM (e.g. hydrocarbons, paraffins, lipids, etc.), or an inorganic PCM (e.g. salt hydrates). A PCM may be heated and liquefied in the internal volume **14** of the housing **12.** The phase change, from solid state to liquid state, results in large energy recovery. Energy is discharged when the reverse phase change occurs, i.e., from liquid state back to solid state.

For example, the first working fluid **24** may be allowed to take up waste heat from an engine (outside the thermal energy storage system **10**), and then when the first working fluid **24** enters the energy storage system **10,** it will transfer the heat energy to the PCM (heat storing material **16**), wherein the heat energy may subsequently be released to the second working fluid **26,** and may be used, for example, to heat a driver's cabin. It should be understood that the above is just one illustrative example and it should be understood that many other implementations are conceivable. Thus, there are many different ways to provide a heat source for the first working fluid **24** to receive heat and bring it into the thermal energy storage system **10,** as well as many different ways to provide a heat sink for receiving heat that has been received by the second working fluid **26** in the thermal energy storage system **10** and brought out from the thermal energy storage system **10.**

As illustrated in **FIG. 2****,** each one of the first and second conduit arrangement **20, 22** may be immersed in the heat storing material **16.** Thus, the first conduit arrangement **20** may be immersed in the heat storing material **16** to enable thermal energy to be transferred between the first working fluid **24** and the heat storing material **16,** and the second conduit arrangement **22** may be immersed in the heat storing material **16** to enable thermal energy to be transferred between the heat storing material **16** and the second working fluid **26.**

The first conduit arrangement **20** may be configured to guide a relatively hot first working fluid **24** from a first fluid inlet **28** to a first fluid outlet **32.** The heat storing material **16** may receive the heat energy from the relatively hot first working fluid **24.** Conversely, the second conduit arrangement **22** may be configured to guide a relatively cold second working fluid **26** from a second fluid inlet **30** to a second fluid outlet **34.** The heat storing material **16** may discharge heat energy to the relatively cold second working fluid **26.**

Depending on the implementation, working fluid may be standing still in one of the first and second conduit arrangements **20, 22,** while working fluid may be flowing through the other one of the first and second conduit arrangements **20, 22.** In other implementations, working fluid may simultaneously be flowing through the first and the second conduit arrangements **20, 22.** In such case, there is a continuous thermal energy transfer into and out of the thermal heat energy storage system **10.** The relatively hot first working fluid **24** brings heat into the internal volume **14** of the insulated housing **12,** and heat is picked up by the relatively cold second working fluid **26** as it flows through the insulated housing **12.**

In case the heat storing material **16** is a PCM, the relatively hot first working fluid **24,** when guided from the first fluid inlet **28** to the first fluid outlet **32,** may cause the PCM in the internal volume **14** to change from solid state to liquid state. Conversely, the relatively cold second working fluid **26,** when guided from the second fluid inlet **30** to the second fluid outlet **34,** may cause the PCM in the internal volume **14** to change from liquid state back to solid state.

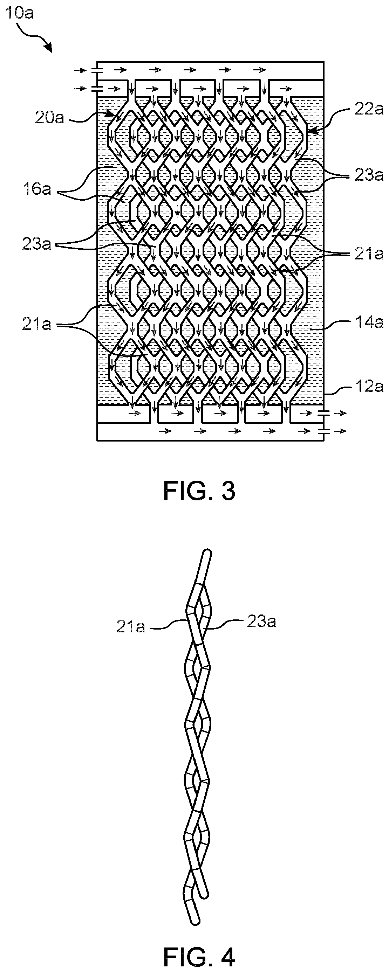

**FIG. 3** schematically illustrates a thermal energy storage system **10a** according to another example of this disclosure. The thermal energy storage system **10a** comprises an insulated housing **12a** defining an internal volume **14a.** A heat storing material **16a,** such as a PCM, is contained in the internal volume **14a.** A first conduit arrangement **20a** and a second conduit arrangement **22a** each extend across the internal volume **14a.** Thermal energy is therefore transferrable between the conduit arrangements **20a, 22a** and the heat storing material **16a.** As can be seen in **FIG. 3****,** the first conduit arrangement **20a** comprises a first plurality of passages **21a** forming a first meshed structure. Similarly, the second conduit arrangement **22a** comprises a second plurality of passages **23a** forming a second meshed structure.

In this example, the first meshed structure (of the first conduit arrangement **20a**) is laterally displaced relative to the second meshed structure (of the second conduit arrangement **22a**). In this example, the term "laterally" is understood to refer to a direction transversely to the general direction that fluid flows through the internal volume **20a** between a fluid inlet to a fluid outlet). Hereby, the first plurality of passages **21a** will at least partly overlap the second plurality of passages **23a** at locations where the passages cross above/below each other. Such locations may therefore suitably form points of contact between the first conduit arrangement **20a** and the second conduit arrangement **22a.** Thus, such points of contact enable thermal energy to be transferrable between the first working fluid in the first conduit arrangement **20a** and the second working fluid in the second conduit arrangement **22a.**

Compared to simple linear pipes extending through a heat storing material, the meshed structures illustrated in **FIG. 3****,** will act more like a plate since the meshed structures increase the heat transfer area relative to the heat storing material **16a.** Thus, heat transfer may be improved.

As illustrated in **FIG. 3****,** the first plurality of passages **21a** may be interlaced with the second plurality of passages **23a,** such that the first plurality of passages **21a** alternatingly and repeatedly extends on mutually opposite sides of the second meshed structure. This can best be seen more clearly in **FIG. 4****,** which schematically illustrates a view of a detail of the example in **FIG. 3****.** In particular, **FIG. 4** schematically illustrates a side view in which the passages **21a, 23a** of the first conduit arrangement and second conduit arrangements, respectively, are interlaced, changing sides relative to each other along their extensions.

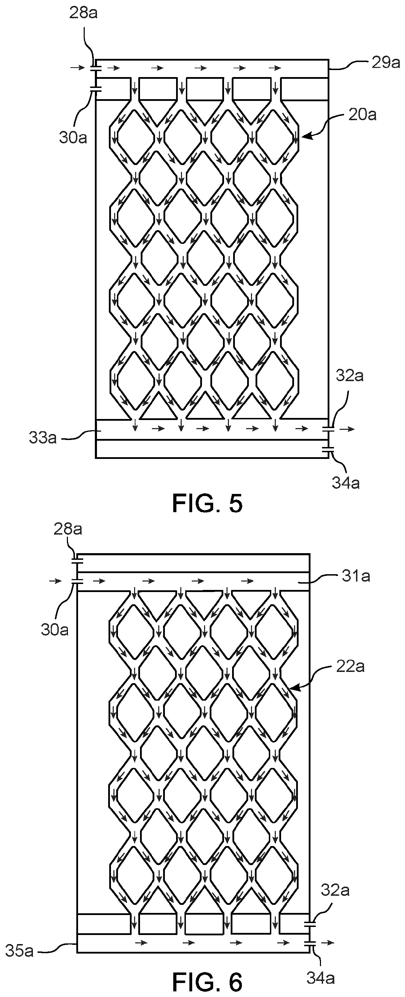

**FIGS. 5** and **6** schematically illustrate the functioning of conduit arrangements that are present in the example in **FIG. 3****.** In **FIG. 5****,** only the first conduit arrangement **20a** is shown. The second conduit arrangement has been removed so as to not obscure details that will be discussed in relation to the first conduit arrangement. As can be seen in **FIG. 5****,** the first conduit arrangement **20a** receives relatively hot first working fluid from a first fluid inlet **28a.** The first fluid inlet **28a** may suitably comprise or be in fluid communication with a first inlet manifold **29a** which distributes first working fluid to a plurality of entry points of the first plurality of passages that form part of the first conduit arrangement **20a.** In this example, four entry points are illustrated, however, any other suitably number of entry points are conceivable. The relatively hot first working fluid will flow from the entry points along the first plurality of passages that form the first meshed structure. As the relatively hot first working fluid flows in the first meshed structure, thermal energy will be transferred from the first working fluid to the heat storing material. Thermal energy will also be transferred to the second working fluid via the points of contact (discussed in relation to FIG. 3) with the second conduit arrangement. At the opposite end of the first meshed structure, the first working fluid reaches a plurality of exit points (here illustrated as four, although other number of exit points are conceivable). The first working fluid, having transferred some of the thermal energy, will now have lowered its temperature, and will leave the insulated housing, by flowing from the exit points to the first fluid outlet **32a,** for example, via a first outlet manifold **33a** which may be in communication with or form part of the first fluid outlet **32a.**

In **FIG. 6****,** only the second conduit arrangement **22a** is shown. The first conduit arrangement has been removed so as to not obscure details that will be discussed in relation to the second conduit arrangement **22a.** As can be seen in **FIG. 6****,** the second conduit arrangement **22a** receives relatively cold second working fluid from a second fluid inlet **30a.** The guiding of the flow of the second working fluid may suitably be similar to the previously discussed guiding of the first working fluid. Thus, as illustrated in **FIG. 6****,** the second fluid inlet **30a** may suitably comprise or be in fluid communication with a second inlet manifold **31a** which distributes the second working fluid to a plurality of entry points of the second plurality of passages that form part of the second conduit arrangement **22a.** The relatively cold second working fluid will flow from the entry points along the second plurality of passages that form the second meshed structure. As the relatively cold second working fluid flows in the second meshed structure, thermal energy will be transferred from the heat storing material to the second working fluid. As mentioned previously, thermal energy will also be transferred from the first working fluid to the second working fluid via the previously mentioned points of contact (not shown in **FIG. 6**). The second working fluid, having received some of the thermal energy, will now have raised its temperature, and will leave the insulated housing by flowing from exit points to the second fluid outlet **34a,** for example via a second outlet manifold **35a** which may be in communication with or form part of the second fluid outlet **34a.**

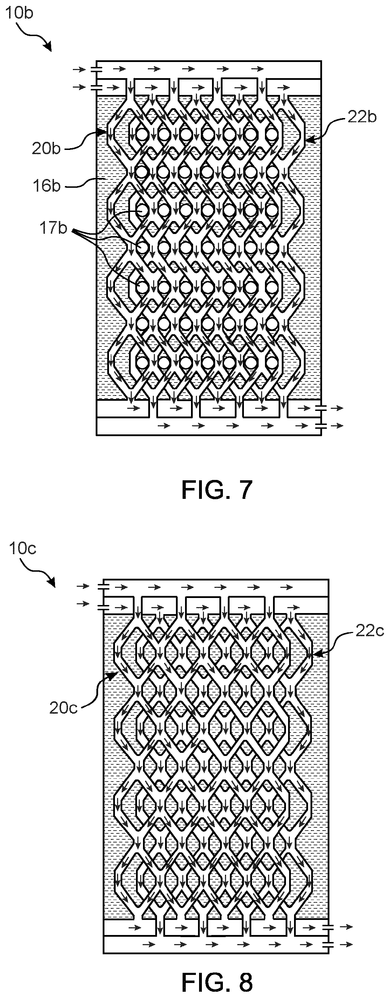

**FIG. 7** schematically illustrates a thermal energy storage system **10b** according to yet another example of this disclosure. Analogously with the example shown in **FIG. 3****,** the first and second conduit arrangements **20b, 22b** are immersed in heat storing material **16b.** Additionally, the thermal energy storage system **10b** comprises a plurality of capsules **17b** containing heat storing material, such as a PCM. The capsules **17b** are located in mesh openings formed by the first and/or second meshed structure. Thus, heat transfer between the conduit arrangements **20b, 22b** and the heat storing material may take place both at the interface with the encapsulated heat storing material (i.e., at **17b**) and at the interface with the not encapsulated heat storing material (i.e., at **16b**). In other examples, capsules **17b** may be located in mesh openings formed by the first and/or second meshed structure, but the first and second conduit arrangements 20a, **22a** are not immersed in heat storing material. In such other examples, the heat transfer between the conduit arrangements **20a, 22a** and the heat storing material would only be via the encapsulated heat storing material, i.e., via capsules **17b.**

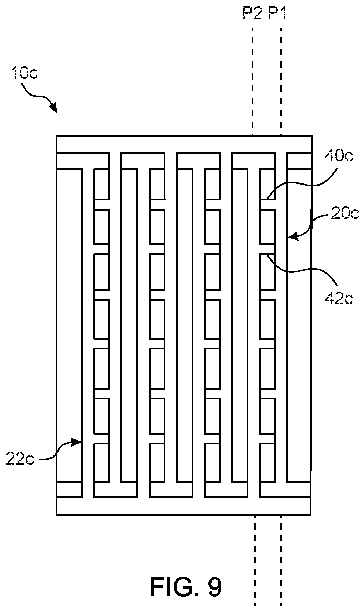

**FIG. 8** schematically illustrates a thermal energy storage system **10c** according to a further example of this disclosure. Unlike the example in **FIG. 3****,** the passages of the first conduit arrangement **20c** and the second conduit arrangement **22c** are not interlaced, but are kept in separate geometrical planes. Thus, in **FIG. 8****,** the first conduit arrangement **20c** is configured to guide the first working fluid in a first geometrical plane across the internal volume, and the second conduit arrangement **22c** is configured to guide the second working fluid in a second geometrical plane across the internal volume. The second geometrical plane extends in parallel with the first geometrical plane. As shown in **FIG. 9****,** which illustrates a side view of the example in **FIG. 8****,** the first conduit arrangement **20c** may be provided with at least one first conduit portion **40a** that extends from the first geometrical plane **P1** to the second geometrical plane **P2** to enable the first working fluid to come into contact with an outside surface of the second conduit arrangement **22c.** In **FIG. 9****,** a plurality of such first conduit portions **40a** is illustrated for allowing thermal energy to be transferred between the first working fluid and the second working fluid. The first conduit portions **40a** may, in at least some examples be designed as fins for increased heat transfer area with respect to the heat storing material. The first and second conduit arrangements **20c, 22c** may also be provided with fins for increased heat transfer area at other positions along the conduit arrangements **20c, 22c.** **FIG. 9** also shows that the second conduit arrangement **22a** may be provided with second conduit portions **42c** extending from the second geometrical plane **P2** to the first geometrical plane **P1** to enable the second working fluid to come into contact with an outside surface of the first conduit arrangement **20c.**

It should be understood that although the drawings have shown examples in which the first conduit arrangement is in contact with the second conduit arrangement, it should be understood that in other examples, the thermal energy storage system may in addition to the herein discussed and shown structures additionally include traditional pipes carrying hot and cold working fluid respectively. For instance, a thermal energy storage system may in some examples include the meshed structures illustrated in **FIG. 3****,** as well as traditional pipes carrying relatively hot and cold working fluid, respectively.

Example 1: A thermal energy storage system, comprising:
- an insulated housing defining an internal volume,
- a heat storing material contained in said internal volume,
- a first conduit arrangement configured to carry a first working fluid, the first conduit arrangement extending across said internal volume such that thermal energy is transferrable between the first working fluid and the heat storing material, and
- a second conduit arrangement configured to carry a second working fluid, the second conduit arrangement extending across said internal volume such that thermal energy is transferrable between the heat storing material and the second working fluid,

wherein the first working fluid and the second working fluid are fluidly separated from each other inside the housing,
wherein the first conduit arrangement and the second conduit arrangement are in contact with each other so that thermal energy is transferrable between the first working fluid and the second working fluid.

Example 2: The thermal energy storage system of example 1, wherein the first conduit arrangement is immersed in the heat storing material to enable thermal energy to be transferred between the first working fluid and the heat storing material, and wherein the second conduit arrangement is immersed in the heat storing material to enable thermal energy to be transferred between the heat storing material and the second working fluid.

Example 3: The thermal energy storage system of any one of examples 1-2, wherein the heat storing material is a phase change material.

Example 4: The thermal energy storage system of example 3, wherein the first conduit arrangement is configured to guide a relatively hot working fluid from a first fluid inlet to a first fluid outlet, to cause phase change material in said internal volume to change from solid state to liquid state.

Example 5: The thermal energy storage system of any one of examples 3-4, wherein the second conduit arrangement is configured to guide a relatively cold working fluid from a second fluid inlet to a second fluid outlet, to cause phase change material in said internal volume to change from liquid state to solid state.

Example 6: The thermal energy storage system of any one of examples 1-5, wherein the first conduit arrangement comprises a first plurality of passages forming a first meshed structure.

Example 7: The thermal energy storage system of any one of examples 1-6, wherein the second conduit arrangement comprises a second plurality of passages forming a second meshed structure.

Example 8: The thermal energy storage system of example 7 when dependent on example 6, wherein the first plurality of passages at least partly overlaps the second plurality of passages.

Example 9: The thermal energy storage system according to example 7 when dependent on example 6 or according to example 8, wherein said first plurality of passages are interlaced with said second plurality of passages, such that said first plurality of passages alternatingly and repeatedly extend on mutually opposite sides of the second meshed structure.

Example 10: The thermal energy storage system of example 9, further comprising a plurality of capsules containing heat storing material, such as phase change material, wherein the capsules are located in mesh openings formed by the first and/or second meshed structure.

Example 11: The thermal energy storage system of any of examples 1-10, wherein said first conduit arrangement and said second conduit arrangement form a conduit arrangement pair, wherein the thermal energy storage comprises a plurality of such conduit arrangement pairs extending in parallel with one another.

Example 12: The thermal energy storage system of any of examples 1-11, wherein at least one of the first and second conduit arrangements are provided with fins for increased heat transfer area.

Example 13: The thermal energy storage system of any one of examples 1-12, further comprising metal foam soaked in said heat storing material.

Example 14: A vehicle comprising the thermal energy storage system of any one of examples 1-13.

Example 15: The vehicle of example 14, further comprising:
- a heat source, such as a retarder, battery, internal combustion engine, motor, fuel cell aggregates, wherein the first working fluid is configured to absorb thermal energy from the heat source and is configured to, from the first conduit arrangement, discharge absorbed thermal energy, and
- a heat sink, such as a battery or cab heating system, wherein the second working fluid, in the second conduit arrangement, is configured to absorb thermal energy and is configured to discharge absorbed thermal energy to the heat sink.

Example 16: The thermal energy storage system of any of example 1-8 or 10-13, wherein the first conduit arrangement is configured to guide the first working fluid in a first geometrical plane across said internal volume, wherein the second conduit arrangement is configured to guide the second working fluid in a second geometrical plane across said internal volume, wherein the second geometrical plane extends in parallel with the first geometrical plane.

Example 17: The thermal energy storage system of example 16, wherein the first conduit arrangement is provided with at least one first conduit portion extending from the first geometrical plane to the second geometric plane to enable the first working fluid to come into contact with an outside surface of the second conduit arrangement.

Example 18: The thermal energy storage system of any of examples 16-17, wherein the second conduit arrangement is provided with at least one second conduit portion extending from the second geometrical plane to the first geometric plane to enable the second working fluid to come into contact with an outside surface of the first conduit arrangement.

Example 19: The thermal energy storage system of any of examples 6-10, wherein the passages forming the meshed structure or structures extend diagonally with respect to a main flow direction through the internal volume.

Example 20: The thermal energy storage system of example 9 or any example dependent on example 9, wherein said interlaced first and second plurality of passages overlap each other at locations where the passages cross above/below each other, forming points of contact between the first conduit arrangement and the second conduit arrangement.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present invention is not limited to the aspects described above and illustrated in the drawings; rather, the skilled person will recognize that many changes and modifications may be made provided they are within the scope of the appended claims.

## Claims

1. A thermal energy storage system (10a, 10b, 10c), comprising:
- an insulated housing (12a) defining an internal volume (14a),
- a heat storing material (16a, 16b) contained in said internal volume (14a),
- a first conduit arrangement (20a, 20b, 20c) configured to carry a first working fluid (24), the first conduit arrangement (20a, 20b, 20c) extending across said internal volume (14a) such that thermal energy is transferrable between the first working fluid (24) and the heat storing material (16a, 16b), and
- a second conduit arrangement (22a, 22b, 22c) configured to carry a second working fluid (26), the second conduit arrangement (22a, 22b, 22c) extending across said internal volume (14a) such that thermal energy is transferrable between the heat storing material (16a, 16b) and the second working fluid (26),
wherein the first working fluid and the second working fluid are fluidly separated from each other inside the housing,
wherein the first conduit arrangement (20a, 20b, 20c) and the second conduit arrangement (22a, 22b, 22c) are in contact with each other so that thermal energy is transferrable between the first working fluid and the second working fluid,
**characterized in that**
the first conduit arrangement (20a, 20b, 20c) comprises a first plurality of passages (21a) forming a first meshed structure, and
the second conduit arrangement (22a, 22b, 22c) comprises a second plurality (23a) of passages forming a second meshed structure.

2. The thermal energy storage system (10a, 10b, 10c) of claim 1, wherein the first conduit arrangement (20a, 20b, 20c) is immersed in the heat storing material (16a, 16b) to enable thermal energy to be transferred between the first working fluid (24) and the heat storing material (16a, 16b), and wherein the second conduit arrangement (22a, 22b, 22c) is immersed in the heat storing material (16a, 16b) to enable thermal energy to be transferred between the heat storing material (16a, 16b) and the second working fluid (26).

3. The thermal energy storage system (10a, 10b, 10c) of any one of claims 1-2, wherein the heat storing material (16a, 16b) is a phase change material.

4. The thermal energy storage system (10a, 10b, 10c) of claim 3, wherein the first conduit arrangement (20a, 20b, 20c) is configured to guide a relatively hot working fluid (24) from a first fluid inlet (28a) to a first fluid outlet (32a), to cause phase change material in said internal volume (14) to change from solid state to liquid state.

5. The thermal energy storage system (10a, 10b, 10c) of any one of claims 3-4, wherein the second conduit arrangement (22a, 22b, 22c) is configured to guide a relatively cold working fluid (26) from a second fluid inlet (30a) to a second fluid outlet (34a), to cause phase change material in said internal volume (14) to change from liquid state to solid state.

6. The thermal energy storage system (10a, 10b, 10c) of any one of claims 1-5, wherein the first plurality of passages (21a) at least partly overlaps the second plurality of passages (23a).

7. The thermal energy storage system (10a, 10b) of any one of claims 1-6, wherein said first plurality of passages (21a) are interlaced with said second plurality of passages (23a), such that said first plurality of passages (21a) alternatingly and repeatedly extend on mutually opposite sides of the second meshed structure.

8. The thermal energy storage system (10b) of claim 7, further comprising a plurality of capsules (17b) containing heat storing material, such as phase change material, wherein the capsules (17b) are located in mesh openings formed by the first and/or second meshed structure.

9. The thermal energy storage system (10a, 10b, 10c) of any of claims 1-8, wherein said first conduit arrangement (20a, 20b, 20c) and said second conduit arrangement (22a, 22b, 22c) form a conduit arrangement pair, wherein the thermal energy storage (10a, 10b, 10c) comprises a plurality of such conduit arrangement pairs extending in parallel with one another.

10. The thermal energy storage system (10a, 10b, 10c) of any of claims 1-9, wherein at least one of the first and second conduit arrangements (20a, 20b, 20c, 22a, 22b, 22c) are provided with fins for increased heat transfer area.

11. The thermal energy storage system (10a, 10b, 10c) of any one of claims 1-10, further comprising metal foam soaked in said heat storing material (16a, 16b).

12. A vehicle (1) comprising the thermal energy storage system (10a, 10b, 10c) of any one of claims 1-11.

13. The vehicle (1) of claim 12, further comprising:
- a heat source, such as a retarder, battery, internal combustion engine, motor, fuel cell aggregates, wherein the first working fluid (24) is configured to absorb thermal energy from the heat source and is configured to, from the first conduit arrangement (20a, 20b, 20c), discharge absorbed thermal energy, and
- a heat sink, such as a battery or cab heating system, wherein the second working fluid (26), in the second conduit arrangement (22a, 22b, 22c), is configured to absorb thermal energy and is configured to discharge absorbed thermal energy to the heat sink.

## Patentansprüche

1. Wärmeenergiespeichersystem (10a, 10b, 10c), umfassend:
- ein isolierendes Gehäuse (12a), das ein inneres Volumen (14a) definiert,
- ein Wärmespeichermaterial (16a, 16b), das in dem inneren Volumen (14a) enthalten ist,
- eine erste Leitungsanordnung (20a, 20b, 20c), die dazu konfiguriert ist, ein erstes Arbeitsfluid (24) mitzuführen, wobei sich die erste Leitungsanordnung (20a, 20b, 20c) über das innere Volumen (14a) erstreckt, sodass Wärmeenergie zwischen dem ersten Arbeitsfluid (24) und dem Wärmespeichermaterial (16a, 16b) übertragbar ist, und
- eine zweite Leitungsanordnung (22a, 22b, 22c), die dazu konfiguriert ist, ein zweites Arbeitsfluid (26) mitzuführen, wobei sich die zweite Leitungsanordnung (22a, 22b, 22c) über das innere Volumen (14a) erstreckt, sodass Wärmeenergie zwischen dem Wärmespeichermaterial (16a, 16b) und dem zweiten Arbeitsfluid (26) übertragbar ist,
wobei das erste Arbeitsfluid und das zweite Arbeitsfluid innerhalb des Gehäuses fluidisch voneinander getrennt sind,
wobei die erste Leitungsanordnung (20a, 20b, 20c) und die zweite Leitungsanordnung (22a, 22b, 22c) miteinander in Kontakt stehen, sodass Wärmeenergie zwischen dem ersten Arbeitsfluid und dem zweiten Arbeitsfluid übertragbar ist,
**dadurch gekennzeichnet, dass**
die erste Leitungsanordnung (20a, 20b, 20c) eine erste Vielzahl von Kanälen (21a) umfasst, die eine erste netzartige Struktur bildet, und
die zweite Leitungsanordnung (22a, 22b, 22c) eine zweite Vielzahl (23a) von Kanälen umfasst, die eine zweite netzartige Struktur bildet.

2. Wärmeenergiespeichersystem (10a, 10b, 10c) nach Anspruch 1, wobei die erste Leitungsanordnung (20a, 20b, 20c) in dem Wärmespeichermaterial (16a, 16b) eingebettet ist, um zu ermöglichen, dass Wärmeenergie zwischen dem ersten Arbeitsfluid (24) und dem Wärmespeichermaterial (16a, 16b) übertragen wird, und wobei die zweite Leitungsanordnung (22a, 22b, 22c) in dem Wärmespeichermaterial (16a, 16b) eingebettet ist, um zu ermöglichen, dass Wärmeenergie zwischen dem Wärmespeichermaterial (16a, 16b) und dem zweiten Arbeitsfluid (26) übertragen wird.

3. Wärmeenergiespeichersystem (10a, 10b, 10c) nach einem der Ansprüche 1-2, wobei das Wärmespeichermaterial (16a, 16b) ein Phasenwechselmaterial ist.

4. Wärmeenergiespeichersystem (10a, 10b, 10c) nach Anspruch 3, wobei die erste Leitungsanordnung (20a, 20b, 20c) dazu konfiguriert ist, ein relativ heißes Arbeitsfluid (24) von einem ersten Fluideinlass (28a) zu einem ersten Fluidauslass (32a) zu führen, um zu bewirken, dass das Phasenwechselmaterial in dem inneren Volumen (14) vom festen Zustand zum flüssigen Zustand übergeht.

5. Wärmeenergiespeichersystem (10a, 10b, 10c) nach einem der Ansprüche 3-4, wobei die zweite Leitungsanordnung (22a, 22b, 22c) dazu konfiguriert ist, ein relativ kaltes Arbeitsfluid (26) von einem zweiten Fluideinlass (30a) zu einem zweiten Fluidauslass (34a) zu führen, um zu bewirken, dass das Phasenwechselmaterial in dem inneren Volumen (14) vom flüssigen Zustand zum festen Zustand übergeht.

6. Wärmeenergiespeichersystem (10a, 10b, 10c) nach einem der Ansprüche 1-5, wobei die erste Vielzahl von Kanälen (21a) die zweite Vielzahl von Kanälen (23a) zumindest teilweise überlappt.

7. Wärmeenergiespeichersystem (10a, 10b) nach einem der Ansprüche 1-6, wobei die erste Vielzahl von Kanälen (21a) mit der zweiten Vielzahl von Kanälen (23a) verschachtelt ist, sodass sich die erste Vielzahl von Kanälen (21a) abwechselnd und wiederholt auf einander gegenüberliegenden Seiten der zweiten netzartigen Struktur erstreckt.

8. Wärmeenergiespeichersystem (10b) nach Anspruch 7, ferner umfassend eine Vielzahl von Kapseln (17b), die Wärmespeichermaterial enthält, wie etwa Phasenwechselmaterial, wobei sich die Kapseln (17b) in Netzöffnungen befinden, die durch die erste und/oder die zweite netzartige Struktur gebildet sind.

9. Wärmeenergiespeichersystem (10a, 10b, 10c) nach einem der Ansprüche 1-8, wobei die erste Leitungsanordnung (20a, 20b, 20c) und die zweite Leitungsanordnung (22a, 22b, 22c) ein Leitungsanordnungspaar bilden, wobei der Wärmeenergiespeicher (10a, 10b, 10c) eine Vielzahl von derartigen Leitungsanordnungspaaren umfasst, die sich parallel zueinander erstreckt.

10. Wärmeenergiespeichersystem (10a, 10b, 10c) nach einem der Ansprüche 1-9, wobei mindestens eine der ersten und der zweiten Leitungsanordnung (20a, 20b, 20c, 22a, 22b, 22c) mit Rippen für eine erhöhte Wärmeübertragungsfläche versehen ist.

11. Wärmeenergiespeichersystem (10a, 10b, 10c) nach einem der Ansprüche 1-10, ferner umfassend Metallschaum, der in das Wärmespeichermaterial (16a, 16b) getränkt ist.

12. Fahrzeug (1), umfassend das Wärmeenergiespeichersystem (10a, 10b, 10c) nach einem der Ansprüche 1-11.

13. Fahrzeug (1) nach Anspruch 12, ferner umfassend:
- eine Wärmequelle, wie etwa einen Verzögerer, eine Batterie, eine Brennkraftmaschine, einen Motor, Brennstoffzellenaggregate, wobei das erste Arbeitsfluid (24) dazu konfiguriert ist, Wärmeenergie von der Wärmequelle zu absorbieren, und dazu konfiguriert ist, absorbierte Wärmeenergie von der ersten Leitungsanordnung (20a, 20b, 20c) abzugeben, und
- einen Kühlkörper, wie etwa eine Batterie oder ein Fahrerhausheizsystem, wobei das zweite Arbeitsfluid (26) in der zweiten Leitungsanordnung (22a, 22b, 22c) dazu konfiguriert ist, Wärmeenergie zu absorbieren, und dazu konfiguriert ist, absorbierte Wärmeenergie an den Kühlkörper abzugeben.

## Revendications

1. Système de stockage d'énergie thermique (10a, 10b, 10c), comprenant :
- un boîtier isolé (12a) définissant un volume interne (14a),
- un matériau de stockage de chaleur (16a, 16b) contenu dans ledit volume interne (14a),
- un premier agencement de conduits (20a, 20b, 20c) configuré pour transporter un premier fluide de travail (24), le premier agencement de conduits (20a, 20b, 20c) s'étendant à travers ledit volume interne (14a) de telle sorte que l'énergie thermique soit transférable entre le premier fluide de travail (24) et le matériau de stockage de chaleur (16a, 16b), et
- un second agencement de conduits (22a, 22b, 22c) configuré pour transporter un second fluide de travail (26), le second agencement de conduits (22a, 22b, 22c) s'étendant à travers ledit volume interne (14a) de telle sorte que l'énergie thermique est transférable entre le matériau de stockage de chaleur (16a, 16b) et le second fluide de travail (26),
dans lequel le premier fluide de travail et le second fluide de travail sont séparés fluidiquement l'un de l'autre à l'intérieur du boîtier,
dans lequel le premier agencement de conduits (20a, 20b, 20c) et le second agencement de conduits (22a, 22b, 22c) sont en contact l'un avec l'autre de telle sorte que l'énergie thermique est transférable entre le premier fluide de travail et le second fluide de travail,
**caractérisé en ce que**
le premier agencement de conduits (20a, 20b, 20c) comprend une première pluralité de passages (21a) formant une première structure maillée, et
le second agencement de conduits (22a, 22b, 22c) comprend une seconde pluralité de passages (23a) formant une seconde structure maillée.

2. Système de stockage d'énergie thermique (10a, 10b, 10c) selon la revendication 1, dans lequel le premier agencement de conduits (20a, 20b, 20c) est immergé dans le matériau de stockage de chaleur (16a, 16b) pour permettre le transfert d'énergie thermique entre le premier fluide de travail (24) et le matériau de stockage de chaleur (16a, 16b), et dans lequel le second agencement de conduits (22a, 22b, 22c) est immergé dans le matériau de stockage de chaleur (16a, 16b) pour permettre le transfert d'énergie thermique entre le matériau de stockage de chaleur (16a, 16b) et le second fluide de travail (26).

3. Système de stockage d'énergie thermique (10a, 10b, 10c) selon l'une quelconque des revendications 1 à 2, dans lequel le matériau de stockage de chaleur (16a, 16b) est un matériau à changement de phase.

4. Système de stockage d'énergie thermique (10a, 10b, 10c) selon la revendication 3, dans lequel le premier agencement de conduits (20a, 20b, 20c) est configuré pour guider un fluide de travail relativement chaud (24) d'une première entrée de fluide (28a) à une première sortie de fluide (32a), pour amener le matériau à changement de phase dans ledit volume interne (14) à passer de l'état solide à l'état liquide.

5. Système de stockage d'énergie thermique (10a, 10b, 10c) selon l'une quelconque des revendications 3 à 4, dans lequel le second agencement de conduits (22a, 22b, 22c) est configuré pour guider un fluide de travail relativement froid (26) d'une seconde entrée de fluide (30a) à une seconde sortie de fluide (34a), pour amener le matériau à changement de phase dans ledit volume interne (14) à passer de l'état liquide à l'état solide.

6. Système de stockage d'énergie thermique (10a, 10b, 10c) selon l'une quelconque des revendications 1 à 5, dans lequel la première pluralité de passages (21a) chevauche au moins partiellement la seconde pluralité de passages (23a).

7. Système de stockage d'énergie thermique (10a, 10b) selon l'une quelconque des revendications 1 à 6, dans lequel ladite première pluralité de passages (21a) sont entrelacés avec ladite seconde pluralité de passages (23a), de telle sorte que ladite première pluralité de passages (21a) s'étendent de manière alternée et répétée sur des côtés mutuellement opposés de la seconde structure maillée.

8. Système de stockage d'énergie thermique (10b) selon la revendication 7, comprenant en outre une pluralité de capsules (17b) contenant un matériau de stockage de chaleur, tel qu'un matériau à changement de phase, les capsules (17b) étant situées dans des ouvertures de maille formées par la première et/ou la seconde structure maillée.

9. Système de stockage d'énergie thermique (10a, 10b, 10c) selon l'une quelconque des revendications 1 à 8, dans lequel ledit premier agencement de conduits (20a, 20b, 20c) et ledit second agencement de conduits (22a, 22b, 22c) forment une paire d'agencements de conduits, dans lequel le stockage d'énergie thermique (10a, 10b, 10c) comprend une pluralité de telles paires d'agencements de conduits s'étendant parallèlement les unes aux autres.

10. Système de stockage d'énergie thermique (10a, 10b, 10c) selon l'une quelconque des revendications 1 à 9, dans lequel au moins l'un des premier et second agencements de conduits (20a, 20b, 20c, 22a, 22b, 22c) est pourvu d'ailettes pour une zone de transfert de chaleur accrue.

11. Système de stockage d'énergie thermique (10a, 10b, 10c) selon l'une quelconque des revendications 1 à 10, comprenant en outre une mousse métallique imbibée dudit matériau de stockage de chaleur (16a, 16b).

12. Véhicule (1) comprenant le système de stockage d'énergie thermique (10a, 10b, 10c) selon l'une quelconque des revendications 1 à 11.

13. Véhicule (1) selon la revendication 12, comprenant en outre :
- une source de chaleur, telle qu'un ralentisseur, une batterie, un moteur à combustion interne, un moteur électrique, un régulateur de pile à combustible, dans lequel le premier fluide de travail (24) est configuré pour absorber l'énergie thermique de la source de chaleur et est configuré pour, à partir du premier agencement de conduits (20a, 20b, 20c), évacuer l'énergie thermique absorbée, et
- un dissipateur thermique, tel qu'une batterie ou un système de chauffage de cabine, dans lequel le second fluide de travail (26), dans le second agencement de conduits (22a, 22b, 22c), est configuré pour absorber l'énergie thermique et est configuré pour décharger l'énergie thermique absorbée vers le dissipateur thermique.
